# EUROPÄISCHE PATENTANMELDUNG

(11) **EP 1 837 264 A2**
(43) Veröffentlichungstag der Anmeldung: **26.09.2007**
(21) Anmeldenummer: 06450156.2
(22) Anmeldetag: 30.10.2006
(51) Int. Cl.: B61B 7/00, B61B 12/06

(54) **Verfahren zum Betrieb einer Seilbahnanlage mit erhöhter Sicherheit, und entsprechende Seilbahnanlage**

(30) Priorität: 23.03.2006 AT 4962006
(71) Anmelder: Innova Patent GmbH, 6960 Wolfurt (AT)
(72) Erfinder: Hinteregger, Christoph, Dipl.Ing., 6922 Wolfurt (AT)
(74) Vertreter: Atzwanger, Richard

(57) **Zusammenfassung**

Verfahren zum Betrieb einer Seilbahnanlage und Seilbahnanlage mit einer Talstation [1] und mit einer Bergstation [2], mit einem Trag- und Förderseil [3], durch welches die Fahrbetriebsmittel [5] zwischen den Stationen [1,2] verfahren werden, bzw. mit mindestens einem Tragseil, auf welchem die Fahrbetriebsmittel zwischen den Stationen verfahren werden. Dabei werden die Neigungslagen von Fahrbetriebsmitteln [5] gegenüber der vertikalen Betriebslage mit jeweils einem an diesen befindlichen Sensor erfasst und wird bei Überschreiten von mindestens einem ersten Grenzwert der Neigungslage eines der Fahrbetriebsmittel [5] über einen an diesem vorgesehenen Sender an mindestens einen in den Stationen [1, 2] befindliche Empfänger [11, 21] ein erstes Steuersignal übertragen, durch welches die Geschwindigkeit des Trag- und Förderseiles [3] vermindert wird, sowie wird bei Überschreiten eines vorgegebenen zweiten Grenzwertes in der Neigungslage eines der Fahrbetriebsmittel [5] an den Empfänger [11, 21] ein zweites Steuersignal übertragen, durch welches der Antrieb für das Förderseil [5] abgestellt wird.

## Beschreibung

Die gegenständliche Erfindung betrifft ein Verfahren zum Betrieb einer Seilbahnanlage mit einer Talstation und mit einer Bergstation, mit mindestens einem Trag- und Förderseil, durch welches Fahrbetriebsmittel zwischen den Stationen bewegt werden bzw. mit mindestens einem Tragseil, auf welchem Fahrbetriebsmittel mittels mindestens eines Förderseiles zwischen den Stationen verfahren werden.
Weiters betrifft diese Erfindung eine Seilbahnanlage, welche nach dem erfindungsgemäßen Verfahren betrieben werden kann.

Beim Betrieb von Seilbahnanlagen besteht das Erfordernis, die herrschenden Windverhältnisse zu berücksichtigen, da andernfalls Störungen des Betriebes auftreten sowie Schadensfälle bzw. Unfälle verursacht werden können. Soferne im Bereich der Seilbahnanlage die Windgeschwindigkeiten übliche Größen überschreiten, besteht das Erfordernis, die Geschwindigkeit des Förderseiles für die Fahrbetriebsmittel von z.B. 6 m/sec auf z.B. 1m/sec zu reduzieren. Soferne demgegenüber sehr große Windgeschwindigkeiten auftreten, besteht das Erfordernis, den Betrieb der Seilbahnanlage einzustellen.

Der Grund für diese Erfordernisse besteht darin, dass mit steigenden Windgeschwindigkeiten die Fahrbetriebsmittel aus der vertikalen Lage ausgelenkt werden, wodurch sie längs der Strecke gegen Stützen und in den Bereichen der Stationen gegen Bauteile der Anlage geschleudert werden können, sodass sie beschädigt werden können, wodurch weiters die Fahrbetriebsmittel an den Stützen hängen bleiben können, sodass die Klemmen geöffnet werden und die Fahrbetriebsmittel abstürzen können, wodurch weiters das Trag- und Förderseil aus den Trag- und Führungsrollen ausgehoben werden kann, sodass Seilentgleisungen verursacht werden können, und wodurch zudem die Passagiere besonderen Belastungen ausgesetzt werden. Hierdurch können weiters Beschädigungen der Fahrbetriebsmittel, Störungen im Betrieb der Seilbahnanlage und Verletzungen der Passagiere verursacht werden.
Bei Pendelbahnen können durch sehr starke Auslenkungen Entgleisungen der Laufwerke verursacht werden.

Bisher werden Seilbahnanlagen im Hinblick auf die Windverhältnisse derart betrieben, dass in Abhängigkeit von den im Gebiet der betreffenden Seilbahnanlage herrschenden Windverhältnissen die Geschwindigkeit des Förderseiles vermindert wird bzw. bei sehr großen Windgeschwindigkeiten der Betrieb der Seilbahnanlage eingestellt wird. Dabei wird jedoch nicht der Umstand berücksichtigt, dass an einzelnen Stellen der Seilbahnanlage besondere Windverhältnisse auftreten können, welche gleichfalls eine Verminderung der Fördergeschwindigkeit bzw. eine Abschaltung der Seilbahnanlage erfordern.

Der gegenständlichen Erfindung liegt somit die Aufgabe zugrunde, ein Verfahren zu schaffen, durch welches eine Seilbahnanlage so betrieben werden kann, dass durch ungünstige Windverhältnisse verursachte Betriebsstörungen, Beschädigungen der Seilbahnanlage und Verletzungen der Passagiere mit Sicherheit vermieden werden. Dies wird erfindungsgemäß dadurch erzielt, dass die Neigungslagen von Fahrbetriebsmitteln gegenüber der vertikalen Betriebslage mit jeweils einem an diesen befindlichen Sensor erfasst werden und dass bei Überschreiten von mindestens einem ersten Grenzwert in der Neigungslage eines der Fahrbetriebsmittel über einen an diesem vorgesehene Sender an mindestens einen in den Stationen befindliche Empfänger ein erstes Steuersignal übertragen wird, durch welches die Geschwindigkeit des Förderseiles vermindert wird, sowie dass bei Überschreiten eines vorgegebenen zweiten Grenzwertes in der Neigungslage eines der Fahrbetriebsmittel an den Empfänger ein zweites Steuersignal übertragen wird, durch welches der Antrieb für das Förderseil abgestellt wird.

Vorzugsweise werden durch den am Fahrbetriebsmittel befindlichen Sensor sowohl die Auslenkung des Fahrbetriebsmittels gegenüber der Vertikalen in Fahrtrichtung als auch die Auslenkung des Fahrbetriebsmittels gegenüber der Vertikalen quer zur Fahrtrichtung erfasst und werden diese Messwerte mittels des am Fahrbetriebsmittel befindlichen Senders an den mindestens einen in der Seilbahnanlage befindlichen Empfänger übertragen. Vorzugsweise werden sämtliche der vom Sensor abgegebenen Messwerte an den mindestens einen Empfänger übertragen. Alternativ dazu werden nur diejenigen vom Sensor abgegebenen Messwerte an den mindestens einen Empfänger übertragen, durch welche Auslenkungen der Fahrbetriebsmittel über einen der vorgegebenen Grenzwerte hinaus angegeben werden.

Nach einem Ausführungsbeispiel wird bei einer Auslenkung eines der Fahrbetriebsmittel gegenüber der vertikalen Betriebslage um etwa 10 ° die Geschwindigkeit des Förderseiles auf z.B. 1m/sec vermindert und wird bei einer Auslenkung um etwa 20 ° der Betrieb der Seilbahnanlage eingestellt.

Eine Seilbahnanlage zur Durchführung dieses Verfahrens weist eine Talstation und eine Bergstation auf, weiters weist sie mindestens ein Trag- und Förderseil auf, durch welches die Fahrbetriebsmittel zwischen den Stationen bewegt werden, bzw. weist sie mindestens ein Tragseil auf, auf welchem die Fahrbetriebsmittel zwischen den Stationen verfahren werden, wobei erfindungsgemäß zumindest ein Teil der Fahrbetriebsmittel mit jeweils einem Sensor ausgebildet ist, durch welchen die Neigungslagen des betreffenden Fahrbetriebsmittels gegenüber der vertikalen Betriebslage erfassbar sind und wobei diese Fahrbetriebsmittel jeweils mit einem Sender ausgestattet sind, durch welchen die vom Sensor abgegebenen Messwerte an mindestens einen in den Stationen befindlichen Empfänger abgegeben werden, wodurch der Betrieb der Seilbahnanlage in Abhängigkeit von diesen Messwerten steuerbar ist.

Vorzugsweise sind durch die an Fahrbetriebsmitteln befindlichen Sensoren die Auslenkungen der Fahrbetriebsmittel gegenüber der Vertikalen sowohl in der Fahrtrichtung als auch quer zur Fahrtrichtung erfassbar und angebbar. Vorzugsweise sind weiters die Fahrbetriebsmittel mit einer elektrischen Batterie und bzw. oder mit einem photovoltaischen Element ausgestattet. Weiters können sich auf Stützen der Seilbahnanlage Relaisstationen befinden, wobei diese Relaisstationen mit dem mindestens einen in der Seilbahnanlage befindlichen Empfänger über Signalleitungen verbunden sein können. Zudem können die Relaisstationen und die Empfänger miteinander über Signalleitungen verbunden sein.

Das erfindungsgemäße Verfahren und eine erfindungsgemäße Seilbahnanlage sind nachstehend anhand eines in der Zeichnung dargestellten Ausführungsbeispieles näher erläutert. Es zeigen:
- Fig. 1: eine erfindungsgemäße Seilbahnanlage mit an ein Trag- und Förderseil ankuppelbaren Sesseln, in schematisierter Darstellung;
- Fig.1a: die Bergstation dieser Seilbahnanlage, in schematisierter Darstellung;
- Fig.2, Fig.2a: einen Sessel dieser Seilbahnanlage, in Vorderansicht und in Seitenansicht;
- Fig.3, Fig.3a: einen Sessel dieser Seilbahnanlage, welcher gegenüber der vertikalen Betriebslage quer zum Trag- und Förderseil bzw. in Längsrichtung des Trag- und Förderseiles sehr stark ausgelenkt ist;
- Fig.4, Fig.4a: das Diagramm des Betriebes dieser Seilbahnanlage in Abhängigkeit der Auslenkungen der Sessel von deren vertikaler Betriebslage.

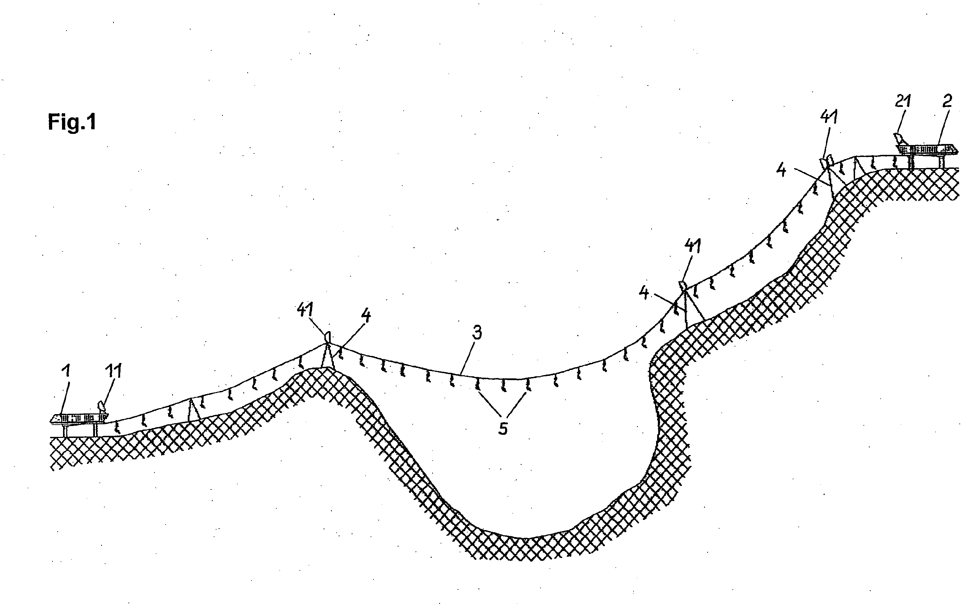

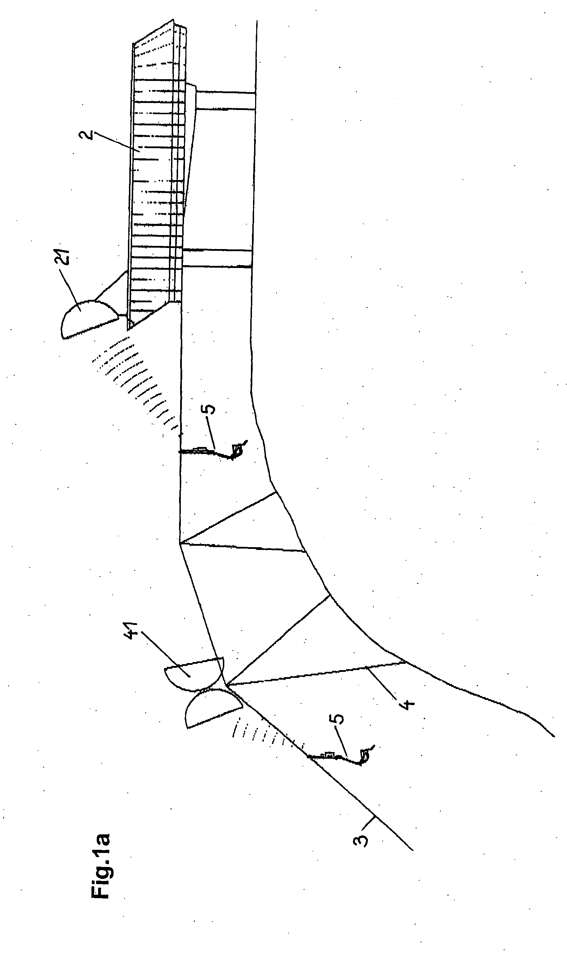

Die in den Fig.1 und 1a dargestellte Seilbahnanlage weist eine Talstation 1 und eine Bergstation 2 auf, zwischen welchen ein in den Stationen 1 und 2 über Antriebs- und Umlenkscheiben geführtes Trag- und Förderseil 3 verläuft, welches längs der Strecke über Stützen 4 geführt ist. Mittels des Trag- und Förderseiles 3 werden zwischen den Stationen 1 und 2 eine Vielzahl von Sesseln 5 bewegt. Die Sessel 5 werden in der Talstation 1 vom Trag- und Förderseil 3 abgekuppelt und durch die Station 1 mit gegenüber dem ständig umlaufenden Trag- und Förderseil 3 stark verminderter Geschwindigkeit hindurchgeführt, wobei die Passagiere auf die Sessel 5 aufsitzen. Hierauf werden die Sessel 5 beschleunigt und an das Trag- und Förderseil 3 angekuppelt, wodurch sie mit den Passagieren zur Bergstation 2 gefördert werden. In der Bergstation 2 werden die Sessel 5 vom Trag- und Förderseil 3 abgekuppelt, worauf sie mit gegenüber der Geschwindigkeit des Trag- und Förderseiles 3 wesentlich verringerter Geschwindigkeit durch die Bergstation 2 hindurchgeführt werden, wobei sie von den Passagieren verlassen werden. Hierauf werden die Sessel 5 wieder beschleunigt und in der Folge an das Trag- und Förderseil 3 angekuppelt, wodurch sie zur Talstation 1 zurückbewegt werden.
Eine derartige Seilbahnanlage ist aus den Stand der Technik bekannt.

Eine erfindungsgemäße Seilbahnanlage ist weiters in der Talstation 1 und in der Bergstation 2 mit Empfängern 11 und 21 sowie zumindest an einigen der Stützen 4 mit Relaisstationen 41 ausgebildet. Die Empfänger 11 und 21 sind miteinander und mit den Relaisstationen 41 über Signalleitungen und bzw. oder über Funk verbunden.

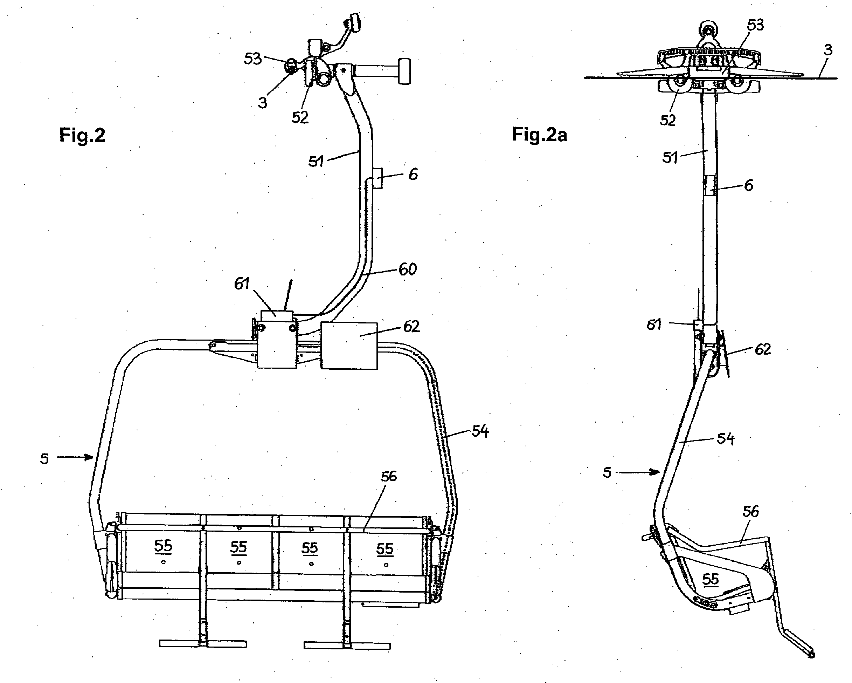

Wie dies aus den Fig.2 und 2a ersichtlich ist, sind die Sessel 5 dieser Seilbahnanlage mit einer Gehängestange 51 ausgebildet, an deren oberen Ende ein Laufwerk 52 und eine Kupplungseinrichtung 53 vorgesehen sind. Mittels der Kupplungseinrichtung 53 sind die Sessel 5 an das Trag- und Förderseil 3 ankuppelbar. An die Gehängestange 51 ist ein Tragrahmen 54 angelenkt, welcher mit Sitzen 55 und mit einem gegenüber den Sitzen 55 verschwenkbaren Schließbügel 56 ausgebildet ist.
Die Ausbildung der Sessel 5 ist gleichfalls aus dem Stand der Technik bekannt.

In Ergänzung zum bekannten Stand der Technik befindet sich an zumindest einigen Sesseln 5 dieser Seilbahnanlage jeweils ein Sensor 6, welcher insbesondere an der Gehängestange 51 vorgesehen ist, durch welchen die Auslenkungen des betreffenden Sessels 5 gegenüber der vertikalen Lage in Längsrichtung des Trag- und Förderseiles 3 und quer zum Trag- und Förderseil 3 erfasst werden. Die Ausgangssignale des Sensors 6 werden über eine Leitung 60 an einen gleichfalls am Sessel 5 befindlichen Sender 61 übertragen. Für die Stromversorgung des Sensors 6 und des Senders 61 ist weiters der Sessel 5 mit einem photovoltaischen Element 62 und bzw. oder mit einer Batterie ausgebildet.

Den an den Sesseln 5 befindlichen Sendern 61 sind einerseits die an Stützen 4 der Seilbahnanlage befindlichen Relaisstationen 41 und andererseits die in den Stationen 1 und 2 befindlichen Empfänger 11 und 21 zugeordnet.

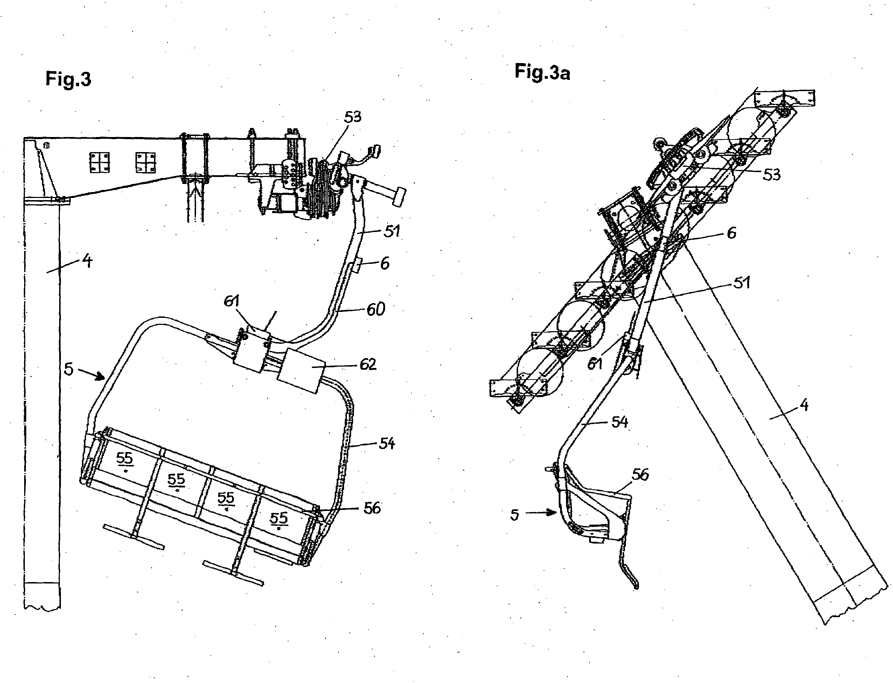

Wie dies in den Fig.3 und 3a dargestellt ist, können die Sessel 5 durch auf diese einwirkende Windkräfte oder auch aufgrund anderer Betriebsumstände gegenüber ihrer vertikalen Betriebslage sowohl quer zur Richtung des Trag- und Förderseiles 3 als auch in Richtung des Trag- und Förderseiles 3 ausgelenkt werden, wobei diese Auslenkungen so stark sein können, dass Kollisionen der Sessel 5 mit Stützen 4 bzw. mit anderen Bauteilen der Seilbahnanlage, weiters ein Ausheben des Trag- und Förderseiles 3 aus den Tragrollen und andere Betriebsstörungen verursacht werden können.
Bei Pendelbahnen können durch sehr starke Auslenkungen der Fahrbetriebsmittel die Laufwerke von den Tragseilen entgleisen.

Der gegenständlichen Erfindung liegt somit die Aufgabe zugrunde, Maßnahmen zu treffen, durch welche derartige Umstände mit Sicherheit vermieden werden. Dies wird dadurch gewährleistet, dass mittels der Sensoren 6 die Auslenkungen der Sessel 3 bei Pendelbewegungen infolge von auf die Sessel 3 einwirkenden Windkräften bzw. anderen Betriebsumständen gemessen werden und diese Messwerte an den jeweils zugeordneten Sender 61 übertragen werden. Vom Sender 61 werden diese Messwerte entweder unmittelbar oder über die Relaisstationen 41 an die in den Stationen 1 und 2 befindlichen Empfänger 11 und 21 übertragen. In den Stationen 1 und 2 erfolgt eine Auswertung dieser Messergebnisse dahingehend, dass dann, sobald durch einen empfangenen Messwert angezeigt wird, dass bei einem der Sessel 5 eine solche Auslenkung erfolgt ist, dass ein erster Grenzwert überschritten worden ist, die Geschwindigkeit des Trag- und Förderseiles 3 auf einen wesentlich geringeren Wert vermindert wird. Dabei können mehrere erste Grenzwerte vorgesehen sein, bei deren Überschreitung das Trag- und Förderseil 3 auf jeweils unterschiedliche Geschwindigkeiten vermindert wird. Soferne eine solche Auslenkung erfolgt, dass ein zweiter Grenzwert überschritten wird, wird der Betrieb der Seilbahnanlage eingestellt.

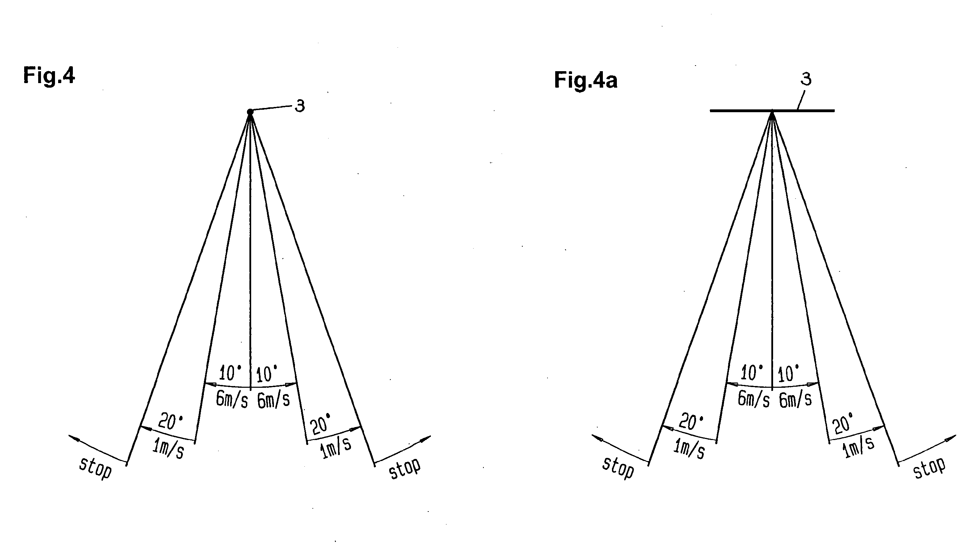

Es wird hiezu auf die Diagramme der Fig.4 und 4a verwiesen, in welchen diese Wirkungsweisen schematisch dargestellt sind:
Soferne die Auslenkungen der Sessel 5 aus der vertikalen Lage quer zum Trag- und Förderseil 3 bzw. in Längsrichtung des Trag- und Förderseiles 3 nicht mehr als z.B. 10° betragen, wird keine Änderung der Geschwindigkeit des Trag- und Förderseiles 3 bewirkt. Sobald die Auslenkungen den Wert von z.B. 10° überschreiten, wird die Geschwindigkeit des Trag- und Förderseiles 3 z.B. auf 1 m/sec herabgesetzt. Sobald weiters die Auslenkungen den Wert von etwa 20° überschreiten, wird der Betrieb der Seilbahnanlage eingestellt.
Sofern sämtliche auf der Seilbahnanlage befindlichen Sessel 5 mit einem Sensor 6 ausgestattet sind, werden die Auslenkungen sämtlicher Sessel 5 für die Steuerung des Betriebes der Seilbahnanlage herangezogen. Alternativ dazu sind jedenfalls einige der Sessel 5 der Seilbahnanlage mit jeweils einem Sensor 6 ausgestattet.

Eine derartige Ausstattung kann bei jeglichen Fahrbetriebsmitteln, also sowohl bei Sesseln als auch bei Kabinen, vorgesehen sein. Maßgeblich dabei ist, dass unabhängig davon, an welcher Stelle der Seilbahnanlage Auslenkungen von Fahrbetriebsmitteln gegenüber der vertikalen Betriebslage erfolgen, von den Größen dieser Auslenkungen abhängige Steuerungen der Geschwindigkeit des Trag- und Förderseiles der Seilbahnanlage bewirkt werden.

Eine derartige Ausstattung kann in gleicher Weise bei Pendelbahnen vorgesehen sein, bei welchen die Fahrbetriebsmittel mittels Förderseilen längs mindestens eines Tragseiles verfahren werden.

## Patentansprüche

1. Verfahren zum Betrieb einer Seilbahnanlage mit einer Talstation (1) und mit einer Bergstation (2), mit einem Trag- und Förderseil (3), durch welches die Fahrbetriebsmittel (5) zwischen den Stationen bewegt werden, bzw. mit mindestens einem Tragseil, auf welchem die Fahrbetriebsmittel zwischen den Stationen (1,2) verfahren werden, **dadurch gekennzeichnet, dass** die Neigungslagen von Fahrbetriebsmitteln (5) gegenüber der vertikalen Betriebslage mit jeweils einem an diesen befindlichen Sensor (6) erfasst werden und dass bei Überschreiten von mindestens einem ersten Grenzwert der Neigungslage eines der Fahrbetriebsmittel (5) über einen an diesem vorgesehenen Sender (61) an mindestens einen in den Stationen (1, 2) befindliche Empfänger (11, 21) ein erstes Steuersignal übertragen wird, durch welches die Geschwindigkeit des Trag- und Förderseiles (3) vermindert wird, sowie dass bei Überschreiten eines vorgegebenen zweiten Grenzwertes in der Neigungslage eines der Fahrbetriebsmittel (5) an den Empfänger (11, 21) ein zweites Steuersignal übertragen wird, durch welches der Antrieb für das Förderseil (5) abgestellt wird.

2. Verfahren nach Patentanspruch 1, **dadurch gekennzeichnet, dass** durch den am Fahrbetriebsmittel (5) befindlichen Sensor (6) sowohl die Auslenkungen des Fahrbetriebsmittel (5) gegenüber der Vertikalen in Fahrtrichtung als auch die Auslenkungen des Fahrbetriebsmittels (5) quer zur Fahrtrichtung erfasst und diese Messwerte mittels des am Fahrbetriebsmittel (5) befindlichen Senders (61) an den mindestens einen in der Seilbahnanlage befindlichen Empfänger (11, 21) übertragen werden.

3. Verfahren nach einem der Patentansprüche 1 und 2, **dadurch gekennzeichnet, dass** sämtliche der vom Sensor (6) abgegebenen Messwerte an den mindestens einen Empfänger (11, 21) übertragen werden.

4. Verfahren nach einem der Patentansprüche 1 bis 3, **dadurch gekennzeichnet, dass** nur diejenigen vom Sensor (6) abgegebenen Messwerte an mindestens einen Empfänger (11, 21) übertragen werden, durch welche Auslenkungen des Fahrbetriebsmittels (5) über einen der vorgegebenen Grenzwerte hinaus angezeigt werden.

5. Verfahren nach einem der Patentansprüche 1 bis, **dadurch gekennzeichnet, dass** bei Auslenkungen eines der Fahrbetriebsmittel (5) über etwa 10 ° eine Verminderung der Geschwindigkeit des Förderseiles [3] bewirkt wird und dass bei Auslenkungen eines der Fahrbetriebsmittel (5) über etwa 20 ° der Betrieb der Seilbahnanlage eingestellt wird.

6. Seilbahnanlage mit einer Talstation (1) und mit einer Bergstation (2), mit mindestens einem Trag- und Förderseil (3), durch welches die Fahrbetriebsmittel (5) zwischen den Stationen (1, 2) bewegt werden, bzw. mit mindestens einem Tragseil, auf welchem die Fahrbetriebsmittel mittels mindestens eines Förderseiles zwischen den Stationen (1,2) verfahren werden, **dadurch gekennzeichnet, dass** zumindest ein Teil der Fahrbetriebsmittel (5) mit jeweils einem Sensor (6) ausgebildet ist, durch welchen die Neigungslagen des betreffenden Fahrbetriebsmittels (5) gegenüber der vertikalen Betriebslage erfassbar sind und dass diese Fahrbetriebsmittel (5) jeweils mit einem Sender (61) ausgestattet sind, durch welchen die vom Sensor (6) abgegebenen Messwerte an mindestens einen in den Stationen (1,2) befindlichen Empfänger (11, 21) abgegeben werden, wodurch der Betrieb der Seilbahnanlage in Abhängigkeit von diesen Messwerten steuerbar ist.

7. Seilbahnanlage nach Patentanspruch 6, **dadurch gekennzeichnet, dass** durch den an Fahrbetriebsmitteln (5) befindlichen Sensor (6) die Auslenkungen der Fahrbetriebsmittel (5) gegenüber der Vertikalen sowohl in der Fahrtrichtung als auch quer zur Fahrtrichtung erfassbar und angebbar sind.

8. Seilbahnanlage nach einem der Patentansprüche 6 und 7, **dadurch gekennzeichnet, dass** Fahrbetriebsmittel (5) mit einer elektrischen Batterie und bzw. oder mit einem photovoltaischen Element (62) ausgestattet sind.

9. Seilbahnanlage nach einem der Patentansprüche 6 bis 8, **dadurch gekennzeichnet, dass** sich auf Stützen (4) der Anlage Relaisstationen (41) befinden.

10. Seilbahnanlage nach Patentanspruch 9, **dadurch gekennzeichnet, dass** die auf Stützen (4) befindlichen Relaisstationen (41) und der mindestens eine in der Seilbahnanlage befindliche Empfänger (11, 21) miteinander über Signalleitungen und bzw. oder über Funk verbunden sind.

11. Seilbahnanlage nach einem der Patentansprüche 6 bis 10, **dadurch gekennzeichnet, dass** die Empfänger (11,21) miteinander über Signalleitungen verbunden sind.
